# EUROPÄISCHE PATENTSCHRIFT

(11) **EP 1 117 167 B1**
(45) Veröffentlichungstag und Bekanntmachung des Hinweises auf die Patenterteilung: **30.09.2009**
(21) Anmeldenummer: 00127396.0
(22) Anmeldetag: 14.12.2000
(51) Int. Cl.: H02G 5/02

(54) **Vorrichtung zum Verbinden von Stromsammelschienen eines Sammelschienensystems mit den Anschlusskontakten eines elektrischen Installationsgerätes**
Device for connecting busbars to the connection terminals of an electrical device
Dispositif pour connecter des barres omnibus aux contacts d'un appareil électrique

(30) Priorität: 14.01.2000 DE 10001184
(43) Veröffentlichungstag der Anmeldung: 18.07.2001
(73) Patentinhaber: Rittal Rudolf Loh GmbH & Co. KG, 35745 Herborn (DE)
(72) Erfinder: Zachrai, Jürgen, 35690 Dillenburg (DE)
(74) Vertreter: Fleck, Hermann-Josef

(56) Entgegenhaltungen:
- FR-A- 1 559 497
- US-A- 5 941 654

## Beschreibung

Die Erfindung betrifft eine Vorrichtung zum Verbinden von Stromsammelschienen eines Sammelschienensystems mit den Anschlusskontakten eines elektrischen Installationsgerätes mittels Verbindungsteilen, die aus einem rechteckigen Flachmaterial abgelängt, abgewinkelt und/oder abgebogen sind.

Eine derartige Vorrichtung zum Verbinden von Stromsammelschienen eines Sammelschienensystems ist in der US-A-5,941,654 gezeigt. Zwischen Stromsammelschienen, die mittels Schrauben paketiert sind, sind Abstandshalter angeordnet.

Eine weitere Vorrichtung mit paketierten Stromsammelschienen und dazwischen liegenden Abstandshaltern zeigt die FR-A-1 559 497.

Bei weiteren bekannten Vorrichtungen dieser Art werden die Verbindungsteile als Schienenstücke aus Flachmaterialien hergestellt, die je nach zu übertragender Stromstärke unterschiedlich großen Querschnitt aufweisen. Dies erfordert für einen abzudeckenden Stromstärkebereich das Bereitstellen einer Vielzahl von unterschiedlichen Schienenstücken, wobei noch erschwerend hinzukommt, dass die Schienenstücke als Flachschienenabschnitte, als Z-förmige Anschlusswinkel oder als Verbindungswinkel ausgebildet sein können, um durch Aneinanderreihung von unterschiedlichen Schienenstücken oder durch Abbiegen oder Abkanten von Flachschienenabschnitten eine Verbindung zwischen den Verbindungsebenen der Stromsammelschienen und den Anschlusskontakten des Installationsgerätes herstellen zu können.

Es ist Aufgabe der Erfindung, eine Vorrichtung der eingangs erwähnten Art zu schaffen, bei der je nach Größe der zu übertragenden Stromstärke die Verbindungsteile mehrere gleiche Schienenstücke umfassen können, die zur ineinander geschachtelten Aneinanderreihung sicher auf vorgegebenem, durch die Dicke des verwendeten Flachmaterials bestimmtem Abstand im Verbindungsteil gehalten sind.

Diese Aufgabe wird nach der Erfindung dadurch gelöst, dass die Verbindungsteile jeweils aus mehreren, gleichen Schienenstücken gebildet sind, die senkrecht zu ihren Breiten in einem Abstand zueinander gehalten sind, der der Dicke des Flachmaterials entspricht, dass die Schienenstücke mittels Paketierhalter auf Abstand gehalten sind, die senkrecht zur Breitseite der Schienenstücke abwechselnd Abstandselemente und Halteplatten aufweisen, und dass die Halteplatten auf beiden Seiten der Paketierhalter Aufnahmen für die Schienenstücke begrenzen, wobei die Paketierhalter mittels durch Bohrungen der Abstandselemente und die Halteplatten hindurch geführten Befestigungsschrauben mit Befestigungsschienen befestigt sind, die als Halfen-Befestigungsschienen ausgebildet sind.

Mit dieser Ausgestaltung der Vorrichtung lassen sich je nach Anzahl der pro Verbindungsteil verwendeten Schienenstücke verschieden große Stromstärken über das Verbindungsteil übertragen. Dabei sind für die Stromstärkenbereiche stets gleiche Schienenstücke im Verbindungsteil verwendbar, es ändert sich lediglich deren Anzahl. Es lassen sich daher so auf Abstand gehaltene Schienenstücke gleicher oder anders gestalteter Ausführung unmittelbar ineinander verschachtelt aneinander reihen.

Eine zusätzliche Befestigung der Verbindungsteile, z. B. in einem Schaltschrank, wird dadurch ermöglicht, dass die Paketierhalter mittels in die Halfen-Befestigungsschiene eingeschobenen Schiebemuttern auf dieser befestigt sind, oder dadurch, dass die Paketierhalter mit einem Abstandselement in die Halfen-Befestigungsschiene einschiebbar oder in einer Einführstellung einsetzbar und durch Verdrehen festlegbar sind, wobei mit einer durch Bohrungen der Abstandselemente und die Halteplatten hindurch geführten Befestigungsschraube die Paketierhalter in der Halfen-Befestigungsschiene unverschiebbar festlegbar sind. Dabei können die Halfen-Befestigungsschienen am Rahmengestell des Schaltschrankes oder an Montageschienen befestigt werden, die mit dem Rahmengestell des Schaltschrankes verbunden sind. Wie bereits erwähnt, lassen sich die Schienenstücke in verschiedener Ausgestaltung auslegen. So sind Flachschienenabschnitte, L-förmige Verbindungswinkel und Z-förmige Anschlusswinkel realisierbar.

Die Aneinanderreihung von Verbindungsteilen mit mehreren Schienenstücken wird dadurch erleichtert, dass die Schienenstücke zumindest in den Endbereichen mit Befestigungsbohrungen versehen sind.

Bei der Ausgestaltung der Paketierhalter kann vorgesehen sein, dass die Paketierhalter aus einzelnen Abstandselementen und einzelnen Halteplatten zusammengesetzt sind, oder dass die Abstandselemente und die Halteplatten zu einem einstückigen Paketierhalter zusammengefasst sind.

Die Paketierhalter sind so gestaltet, dass die Paketierhalter eine Anzahl von Halteplatten und Aufnahmen für Schienenstücke aufweisen, die der Anzahl der Schienenstücke im Verbindungsteil entspricht.

Die Verbindung der Paketierhalter mit der Halfen-Befestigungsschiene kann nach einer weiteren Ausgestaltung auch so durchgeführt sein, dass bei den als Anschlusswinkel oder Verbindungswinkel ausgebildeten Schienenstücken zumindest ein Schenkel mittels Paketierhalter auf vorgegebenem Abstand gehalten sind.

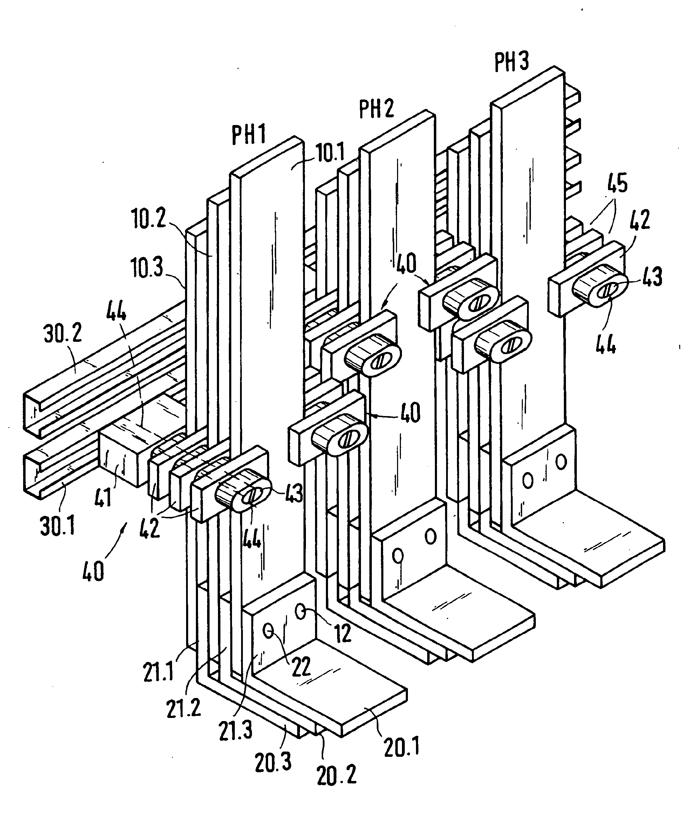

Die Erfindung wird anhand eines in der Zeichnung dargestellten Ausführungsbeispiels näher erläutert.

In der Zeichnung ist am Beispiel eines 3-Phasen-Sammelschienensystems anhand von aus drei Flachschienenabschnitten 20 gebildeten Verbindungsteilen die Erfindung in Einzelheiten erläutert.

Die Flachschienenabschnitte 10.1, 10.2 und 10.3 jedes Verbindungsteils der drei Phasen PH1, PH2 und PH3 sind mittels Paketierhalter 40 mit ihren Breitseiten auf einem vorgegebenen Abstand gehalten, der der Dicke des für die Schienenstücke 10.1, 10.2 und 10.3 verwendeten Flachmaterials entspricht. Dabei bilden die Paketierhalter 40 mit den abwechselnden Abstandselementen 41 und Halteplatten 42 auf gegenüberliegenden Seiten Aufnahmen 45 für die Flachschienenabschnitte 10.1, 10.2 und 10.3. Die Anzahl der Aufnahmen 45 und Halteplatten 42 entspricht dabei der Anzahl der Flachschienenabschnitte, d.h. der Schienenstücke im Verbindungsteil. Sind die Paketierhalter 40 aus Abstandselementen 41 und Halteplatten 42 zusammensetzbar, dann lassen sich die Paketierhalter 40 leicht an unterschiedliche Anzahlen von Schienenstücken anpassen. Die Paketierhalter 40 können mit den Abstandselementen 41 und den Halteplatten 42 auch einstückig ausgebildet und auf eine vorgegebene Anzahl von Aufnahmen 45 z.B. für ein Verbindungsteil mit drei Schienenstücken ausgelegt sein.

Die Flachschienenabschnitte 10.1, 10.2 und 10.3 werden mit beiden Längsseiten in eine Aufnahme 45 eines Paketierhalters 40 eingeführt, wobei mit Pass-und/oder Presssitz eine Art Vorfestlegung erreicht wird. Bei entsprechender größerer Längsabmessung der rechteckigen Halteplatten 42 können auch die einander zugekehrten Längsseiten benachbarter Schienenstücke benachbarter Phasen in die Aufnahmen 45 eines einzigen Paketierhalters 40 eingeführt werden, wenn der Abstand der benachbarten Phasen PH1 und PH2 bzw. PH2 und PH3 sowie der zugeordneten Verbindungsteile nicht allzu groß ist. Bei Abstand zwischen den Phasen PH1, PH2 und PH3 gemäß Ausführungsbeispiel sind pro Verbindungsteil jeweils zwei Paketierhalter 40 sinnvoll, wobei die Paare von Paketierhaltern 40 von Phase zu Phase in Längsrichtung der Flachschienenabschnitte 10.1, 10.2 und 10.3 abwechselnd versetzt sind. Die Paketierhalter 40 werden dann auf zwei parallel ausgerichteten Halfen-Befestigungsschienen 30.1 und 30.2 befestigt.

Werden einstückige Paketierhalter 40 verwendet, dann können diese mit einer Befestigungsschraube 43, die durch die Abstandselemente 41 und die Halteplatten 42 geführt ist, mit einer in die Halfen-Befestigungsschiene 30.1 bzw. 30.2 eingeschobenen Schiebemutter verschraubt werden. Der Paketierhalter 40 lässt sich damit an beliebiger Stelle in Längsrichtung der Halfen-Befestigungsschiene 30.1 bzw. 30.2 axial unverschiebbar festlegen und damit das zusammengesetzte Verbindungsteil positionieren.

Die Paketierhalter 40 können auch mit einem am untersten Abstandselement 41 angeformten Einsatzteil in die Halfen-Befestigungsschiene 30.1 bzw. 30.2 einführen und durch Verdrehen in die Einbaustellung gebracht werden, wobei der Paketierhalter 40 schon in seiner definierten Positionierstellung festgelegt werden kann. Mit einer Befestigungsschraube 43 kann der so in der Halfen-Befestigungsschiene 30.1 bzw. 30.2 positionierte Paketierhalter 40 zusätzlich noch axial unverschiebbar festgelegt werden.

Die Halfen-Befestigungsschienen 30.1 bzw. 30.2 lassen sich in einem Schaltschrank mit dem Rahmengestell oder mit am Rahmengestell angebrachten Montageschienen verbinden. Wie am unteren Ende der Flachschienenabschnitte 10.1, 10.2 und 10.3 des zusammengesetzten Verbindungsteils gezeigt ist, lassen sich in die Abstände zwischen den Flachschienenabschnitten Anschlussschenkel 21.1, 21.2 und 21.3 von L-förmigen Verbindungswinkeln 20.1, 20.2 und 20.3 oder von Z-förmigen Anschlusswinkeln einführen, wenn diese aus demselben Flachmaterial hergestellt sind. Mit Befestigungsbohrungen 12 und 22 lässt sich damit eine gute flächige Kontaktgabe zwischen den ineinander verschachtelten Verbindungsteilen erreichen. Die weiterführenden Schenkel des angeschlossenen Verbindungsteils können direkt aufeinander liegen oder mittels Paketierhalter 40 ebenfalls auf definiertem Abstand gehalten werden. Selbstverständlich bietet auch das obere Ende des aus Flachschienenabschnitten 10.1, 10.2 und 10.3 zusammengesetzte Verbindungsteil gleiche Anschlussmöglichkeiten für weitere, gleiche oder unterschiedliche, aus gleichen oder andersartigen Schienenstücken zusammengesetzte Verbindungsteile. Die dazu gehörigen Paketierhalter 40 können auf Halfen-Befestigungsschienen 30.1 bzw. 30.2 befestigt sein, die nicht unbedingt im Schaltschrank befestigt werden müssen, sondern nur als Träger für die Paketierhalter 40 genützt werden.

## Patentansprüche

1. Vorrichtung zum Verbinden von Stromsammelschienen eines Sammelschienensystems mit den Anschlusskontakten eines elektrischen Installationsgerätes mittels Verbindungsteilen, die aus einem rechteckigen Flachmaterial abgelängt sind,
wobei die Verbindungsteile jeweils aus mehreren, gleichen Schienenstücken (10.1, 10.2, 10.3) gebildet sind, die senkrecht zu ihren Breiten in einem Abstand zueinander gehalten sind, der der Dicke des Flachmaterials entspricht,
wobei die Schienenstücke (10.1, 10.2, 10.3) mittels Paketierhalter (40) auf Abstand gehalten sind, die senkrecht zur Breitseite der Schienenstücke (10.1, 10.2, 10.3) abwechselnd Abstandselemente (41) und Halteplatten (42) aufweisen,
wobei die Halteplatten (42) auf beiden Seiten der Paketierhalter (40) Aufnahmen (45) für die Schienenstücke (10.1, 10.2, 10.3) begrenzen,
wobei die Paketierhalter (40) mittels durch Bohrungen (44) der Abstandselemente (41) und die Halteplatten (42) hindurch geführten Befestigungsschrauben (43)mit Befestigungsschienen befestigt sind,
**dadurch gekennzeichnet,**
**dass** die Verbindungsteile abgewinkelt und/oder abgebogen sind, und
**dass** die Befestigungsschienen als Halfen-Befestigungsschiene (30.1; 30.2) ausgebildet sind.

2. Vorrichtung nach Anspruch 1,
**dadurch gekennzeichnet,**
**dass** die Paketierhalter (40) mittels in die Halfen-Befestigungsschiene (30.1; 30.2) eingeschobenen Schiebemuttern auf dieser befestigt sind.

3. Vorrichtung nach Anspruch 1 oder 2,
**dadurch gekennzeichnet,**
**dass** die Paketierhalter (40) mit einem Abstandselement (41) in die Halfen-Befestigungsschiene (30.1; 30.2) einschiebbar oder in einer Einführstellung einsetzbar und durch Verdrehen festlegbar sind, wobei mit einer durch Bohrungen (44) der Abstandselemente (41) und die Halteplatten (42) hindurch geführten Befestigungsschraube (43) die Paketierhalter (40) in der Halfen-Befestigungsschiene (30.1; 30.2) unverschiebbar festlegbar sind.

4. Vorrichtung nach Anspruch 1,
**dadurch gekennzeichnet,**
**dass** die Schienenstücke (10.1, 10.2, 10.3) als Flachschienenabschnitte ausgebildet sind.

5. Vorrichtung nach Anspruch 1,
**dadurch gekennzeichnet,**
**dass** die Schienenstücke (20.1; 20.2; 20.3) als Z-förmige Anschlusswinkel ausgebildet sind.

6. Vorrichtung nach Anspruch 1,
**dadurch gekennzeichnet,**
**dass** die Schienenstücke als L-förmige Verbindungswinkel ausgebildet sind.

7. Vorrichtung nach einem der Ansprüche 1 bis 6,
**dadurch gekennzeichnet,**
**dass** die Schienenstücke (10.1, 10.2, 10.3 und 20.1, 20.2, 20.3) zumindest in den Endbereichen mit Befestigungsbohrungen (12, 22) versehen sind.

8. Vorrichtung nach einem der Ansprüche 1 bis 7,
**dadurch gekennzeichnet,**
**dass** die Paketierhalter (40) aus einzelnen Abstandselementen (41) und einzelnen Halteplatten (42) zusammengesetzt sind.

9. Vorrichtung nach einem der Ansprüche 1 bis 7,
**dadurch gekennzeichnet,**
**dass** die Abstandselemente (41) und die Halteplatten (42) zu einem einstückigen Paketierhalter (40) zusammengefasst sind.

10. Vorrichtung nach einem der Ansprüche 1 bis 9,
**dadurch gekennzeichnet,**
**dass** die Paketierhalter (40) eine Anzahl von Halteplatten (42) und Aufnahmen (45) für Schienenstücke (10.1; 10.2; 10.3 bzw. 20.1; 20.2; 20.3) aufweisen, die der Anzahl der Schienenstücke im Verbindungsteil entspricht.

11. Vorrichtung nach einem der Ansprüche 1 bis 10,
**dadurch gekennzeichnet,**
**dass** bei den als Anschlusswinkel oder Verbindungswinkel ausgebildeten Schienenstücken zumindest ein Schenkel mittels Paketierhalter (40) auf vorgegebenem Abstand gehalten sind.

## Claims

1. Device for connecting current busbars of a busbar system to the terminal contacts of an electric installation device by means of connecting parts which are cut to length from a rectangular flat material,
wherein the connecting parts are respectively formed from a plurality of identical bar pieces (10.1, 10.2, 10.3) which are held at a distance to one another perpendicular to their widths, which distance corresponds to the thickness of the flat material, wherein the bar pieces (10.1, 10.2, 10.3) are held at a distance by means of packing holders (40) which have alternating distance elements (41) and retaining plates (42) perpendicular to the broad side of the bar pieces (10.1, 10.2, 10.3),
wherein the retaining plates (42) delimit retainers (45) for the bar pieces (10.1, 10.2, 10.3) on both sides of the packing holders (40),
wherein the packing holders (40) are fastened by means of fastening screws (43), having fastening bars, which screws are guided through bores (44) of the distance elements (41) and through the retaining plates (42),
**characterised in that**
the connecting parts are angled and/or bent, and that the fastening bars are formed as a Halfen fastening bar (30.1; 30.2).

2. Device according to Claim 1,
**characterised in that**
the packing holders (40) are fastened on the Halfen fastening bar (30.1; 30.2) by means of sliding nuts pushed into the Halfen fastening bar (30.1; 30.2).

3. Device according to Claim 1 or 2,
**characterised in that**
the packing holders (40) can be pushed into the Halfen fastening bar (30.1; 30.2) with a distance element (41) or can be inserted in an introduction position and can be fixed by rotation, wherein the packing holders (40) can be fixed non-displaceably in the Halfen fastening bar (30.1; 30.2) with a fastening screw (43) guided through bores (44) of the distance elements (41) and through the retaining plates (42).

4. Device according to Claim 1,
**characterised in that**
the bar pieces (10.1, 10.2, 10.3) are formed as flat bar sections.

5. Device according to Claim 1,
**characterised in that**
the bar pieces (20.1; 20.2; 20.3) are formed as Z-shaped joint angles.

6. Device according to Claim 1,
**characterised in that**
the bar pieces are formed as L-shaped connection angles.

7. Device according to one of Claims 1 to 6, **characterised in that**
the bar pieces (10.1, 10.2, 10.3 and 20.1, 20.2, 20.3) are provided with fastening bores (12, 22) at least in the end regions.

8. Device according to one of Claims 1 to 7, **characterised in that**
the packing holders (40) are composed of individual distance elements (41) and individual retaining plates (42).

9. Device according to one of Claims 1 to 7, **characterised in that**
the distance elements (41) and the retaining plates (42) are combined into a one-piece packing holder (40).

10. Device according to one of Claims 1 to 9, **characterised in that**
the packing holders (40) have a number of retaining plates (42) and retainers (45) for bar pieces (10.1; 10.2; 10.3 and 20.1; 20.2; 20.3) which corresponds to the number of bar pieces in the connecting part.

11. Device according to one of Claims 1 to 10, **characterised in that**,
in the case of the bar pieces formed as joint angles or connection angles, at least one limb is held by means of packing holders (40) at a predefined distance.

## Revendications

1. Dispositif pour connecter des barres omnibus d'un système de jeux de barres aux contacts de raccordement d'un appareil d'installation électrique au moyen de pièces de connexion qui sont mises à longueur à partir d'un matériau plat rectangulaire,
les pièces de connexion étant formées chacune de plusieurs tronçons de rail identiques (10.1, 10.2, 10.3) qui, perpendiculairement à leur largeur, sont maintenus à une distance les uns des autres qui correspond à l'épaisseur du matériau plat,
les tronçons de rail (10.1, 10.2, 10.3) étant maintenus à distance au moyen de supports d'empilage (40) qui présentent, perpendiculairement au grand côté des tronçons de rail (10.1, 10.2, 10.3), alternativement des éléments d'écartement (41) et des plaques de maintien (42),
les plaques de maintien (42) limitant des deux côtés des supports d'empilage (40) des logements (45) pour les tronçons de rail (10.1, 10.2, 10.3),
les supports d'empilage (40) étant fixés à des rails de fixation au moyen de vis de fixation (43) passées à travers des trous (44) des éléments d'écartement (41) et les plaques de maintien (42),
**caractérisé en ce**
**que** les pièces de connexion sont coudées et/ou pliées, et que les rails de fixation sont réalisés sous la forme de rails de fixation Halfen (30.1 ; 30.2).

2. Dispositif selon la revendication 1,
**caractérisé en ce**
**que** les supports d'empilage (40) sont fixés sur les rails de fixation Halfen (30.1 ; 30.2) au moyen d'écrous coulissants insérés dans ceux-ci.

3. Dispositif selon la revendication 1 ou 2,
**caractérisé en ce**
**que** les supports d'empilage (40) peuvent être insérés dans le rail de fixation Halfen (30.1 ; 30.2) avec un élément d'écartement (41) ou être mis en place dans une position d'introduction et fixés par rotation, les supports d'empilage (40) pouvant être fixés à demeure dans le rail de fixation Halfen (30.1 ; 30.2) par une vis de fixation (43) passée à travers des trous (44) des éléments d'écartement (41) et les plaques de maintien (42).

4. Dispositif selon la revendication 1,
**caractérisé en ce**
**que** les tronçons de rail (10.1, 10.2, 10.3) sont réalisés sous la forme de sections de rail plates.

5. Dispositif selon la revendication 1,
**caractérisé en ce**
**que** les tronçons de rail (20.1 ; 20.2 ; 20.3) sont réalisés sous la forme d'équerres de raccordement en forme de Z.

6. Dispositif selon la revendication 1,
**caractérisé en ce**
**que** les tronçons de rail sont réalisés sous la forme de d'équerres de connexion en forme de L.

7. Dispositif selon l'une des revendications 1 à 6,
**caractérisé en ce**
**que** les tronçons de rail (10.1, 10.2, 10.3 et 20.1, 20.2, 20.3) sont pourvus de trous de fixation (12, 22) au moins dans les zones d'extrémité.

8. Dispositif selon l'une des revendications 1 à 7,
**caractérisé en ce**
**que** les supports d'empilage (40) sont composés d'éléments d'écartement (41) individuels et de plaques de maintien (42) individuelles.

9. Dispositif selon l'une des revendications 1 à 7,
**caractérisé en ce**
**que** les éléments d'écartement (41) et les plaques de maintien (42) sont regroupés en un support d'empilage (40) d'une seule pièce.

10. Dispositif selon l'une des revendications 1 à 9,
**caractérisé en ce**
**que** les supports d'empilage (40) présentent un nombre de plaques de maintien (42) et de logements (45) pour des tronçons de rail (10.1 ; 10.2 ; 10.3 ou 20.1 ; 20.2 ; 20.3) qui correspond au nombre de tronçons de rail dans la pièce de connexion.

11. Dispositif selon l'une des revendications 1 à 10,
**caractérisé en ce**
**que** dans le cas des tronçons de rail réalisés sous la forme d'équerres de raccordement ou d'équerres de connexion, au moins une branche est maintenue à une distance prédéfinie au moyen de supports d'empilage (40).
